# FASCICULE DE BREVET EUROPEEN

(11) **EP 0 461 049 B1**
(45) Date de publication et mention de la délivrance du brevet: **09.03.1994**
(21) Numéro de dépôt: 91420168.6
(22) Date de dépôt: 28.05.1991
(51) Int. Cl.: B65D 55/02, G11B 23/02

(54) **Ensemble de rangement permettant d'assurer la présentation et la protection d'articles divers sur un site de vente**
Vorrichtung zum Zurschaustellen und Schützen verschiedener Artikel in Verkaufsläden
Unit for the display and protection of various articles at a selling site

(30) Priorité: 29.05.1990 FR 9006897
(43) Date de publication de la demande: 11.12.1991
(73) Titulaire: INTERCO, F-69009 Lyon (FR)
(72) Inventeur: Weill, Bernard, F-69210 Lentilly (FR)
(74) Mandataire: Laurent, Michel

(56) Documents cités:
- DE-A- 2 837 610
- FR-A- 2 508 301
- US-A- 3 871 516

## Description

La présente invention a trait à un ensemble de rangement, déplaçable, permettant d'assurer la présentation et la protection d'articles divers, tels que notamment des cassettes audio ou vidéo, livres, disques compacts... sur le site où ils doivent être vendus.

A ce jour, pour la commercialisation de tels articles, diverses solutions sont proposées pour en assurer à la fois le stockage et la protection ainsi que la présentation sur le site de vente.

L'une des solutions les plus répandues consiste à réaliser un emballage fermé du type "blister" autour de l'article, un tel emballage étant constitué essentiellement par une coquille transparente, fixée sur un fond (plaque carton en général) et qui comporte à sa partie supérieure une ouverture ou un crochet servant à le suspendre sur les broches support d'un présentoir. Dans un tel type de présentation, l'un des problèmes qui se posent est celui de la protection contre les vols. Pour résoudre ce problème, divers systèmes ont été proposés, ces systèmes faisant appel à des solutions électromagnétiques ou radioélectriques. D'une manière générale, ce genre de système est constitué par une barrette magnétisée de façon permanente ou provisoire (dans ce cas, il existe une possibilité de magnétisation et de démagnétisation) ou une pastille émettant des ondes radioélectriques. Si l'acheteur ne fait pas "valider" le produit qu'il désire acquérir, lorsqu'il traverse un portillon récepteur généralement situé à la sortie du magasin, il déclenche une alarme et est immédiatement repéré. La barrette ou la pastille est généralement cachée dans l'emballage, mais la personne indélicate peut sans grand problème découvrir l'emplacement de ladite barrette ou pastille, la décoller et la jeter, de telle sorte que lorsqu'elle franchit le portillon détecteur, le produit ne peut pas être détecté. Par suite, un tel système manque de fiabilité. Outre cet inconvénient, l'adjonction au produit lui-même d'un système antivol augmente les coûts, non seulement par l'obligation de mise en place du système antivol sur chaque produit, mais également par le fait que ledit système antivol ne sert qu'une seule fois.

Or on a trouvé, et c'est ce qui fait l'objet de la présente invention, un ensemble de rangement et de présentation qui permet de résoudre ces problèmes et qui également est très esthétique, simple à fabriquer et à utiliser, et permet éventuellement, selon une forme de réalisation, d'assurer le maintien des articles mis en vente de manière conventionnelle sur un présentoir à la façon d'un "blister" suspendu.

D'une manière générale, l'invention concerne donc un ensemble de rangement, déplaçable, permettant d'assurer la présentation et la protection d'articles divers (cassettes, disques, livres..) sur un site de vente, ledit ensemble étant constitué essentiellement par un coffret (ou enceinte) renfermant un tiroir coulissant, destiné à recevoir le produit, ledit tiroir pouvant prendre deux positions, l'une escamotée à l'intérieur du coffret, l'autre sortie de ce dernier, mais non désolidarisée, afin de pouvoir prendre l'objet qu'il renferme, le coffret externe et le tiroir qu'il renferme comportant des moyens permettant, en coopération, de maintenir ces deux éléments bloqués en position fermée, moyens susceptibles d'être actionnés par un ensemble de déverrouillage du tiroir et ce, en dehors du site de présentation (par exemple à la caisse) :
- lesdits moyens de blocage en position fermée du tiroir par rapport à l'enceinte étant constitués :
   . par au moins une butée ou rampe fixe prévue sur les parois latérales internes de l'enceinte ;
   . par au moins une butée escamotable dans les parois du tiroir, maintenue normalement débordante par rapport à ces dernières, et située à un niveau correspondant à celui des butées ou rampes fixes de l'enceinte et,
- les moyens de déverrouillage étant constitués par au moins deux poussoirs, susceptibles d'être introduits simultanément à l'intérieur de l'enceinte et qui, lors de leur déplacement, s'appuient contre les butées ou rampes escamotables prévues dans les parois du tiroir pour les repousser vers l'extérieur de ces dernières.

Selon une forme de réalisation préférentielle conforme à l'invention, les éléments de blocage en position fermée du tiroir par rapport à l'enceinte sont constitués par deux paires de butées fixes et deux paires de butées escamotables correspondantes, l'ensemble extracteur comportant dans ce cas deux paires d'éléments poussoirs parallèles permettant d'agir simultanément sur les rampes ou butées escamotables prévues sur les parois du tiroir ; dans ce mode de réalisation, un poussoir additionnel ou éjecteur agit sur le fond du tiroir pour le repousser vers l'avant, afin de permettre la prise de l'objet (cassette par exemple) qu'il contient.

Par ailleurs, selon cette forme de réalisation, l'enceinte ou coffret ainsi que le tiroir sont réalisés à partir d'une matière plastique moulée (polycarbonate), l'enceinte étant constituée de deux parties identiques assemblées bord à bord par tout moyen approprié, tel que soudure aux ultra-sons, après mise en place du tiroir entre ces deux parties élémentaires.

Grâce à une telle conception, il est possible de disposer dans une zone inaccessible par un utilisateur, par exemple entre la face inférieure du tiroir et le fond du coffret, un système de détection contre le vol, tel que par exemple une barrette magnétisée ou une pastille émettant des ondes radioélectriques.

L'invention et les avantages qu'elle apporte seront cependant mieux compris grâce à l'exemple de réalisation donné ci-après à titre indicatif mais non limitatif, et qui est illustré par les schémas annexés dans lesquels :
- la figure 1 est une vue en perspective éclatée des différents éléments entrant dans la réalisation d'un ensemble de rangement conforme à l'invention ;

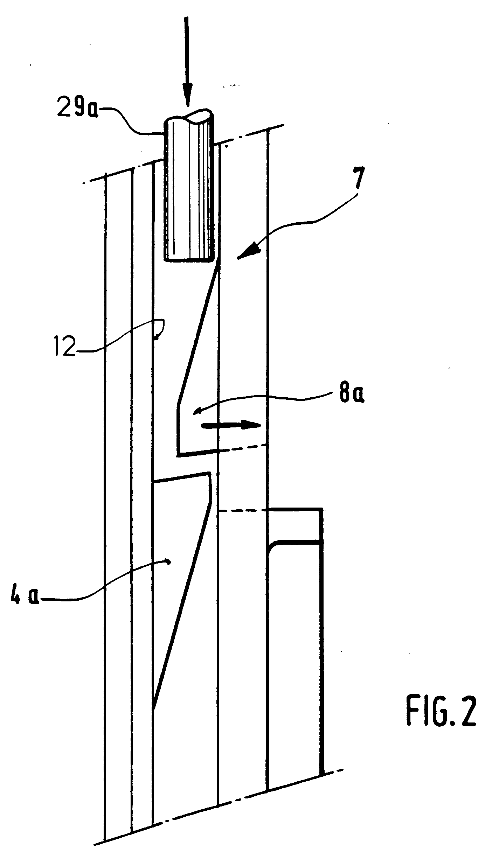

- la figure 2 est une vue de détail, en coupe, montrant la manière dont est réalisé le déverrouillage du tiroir dans un ensemble conforme à l'invention lorsque l'on souhaite en extraire l'objet qu'il contient.

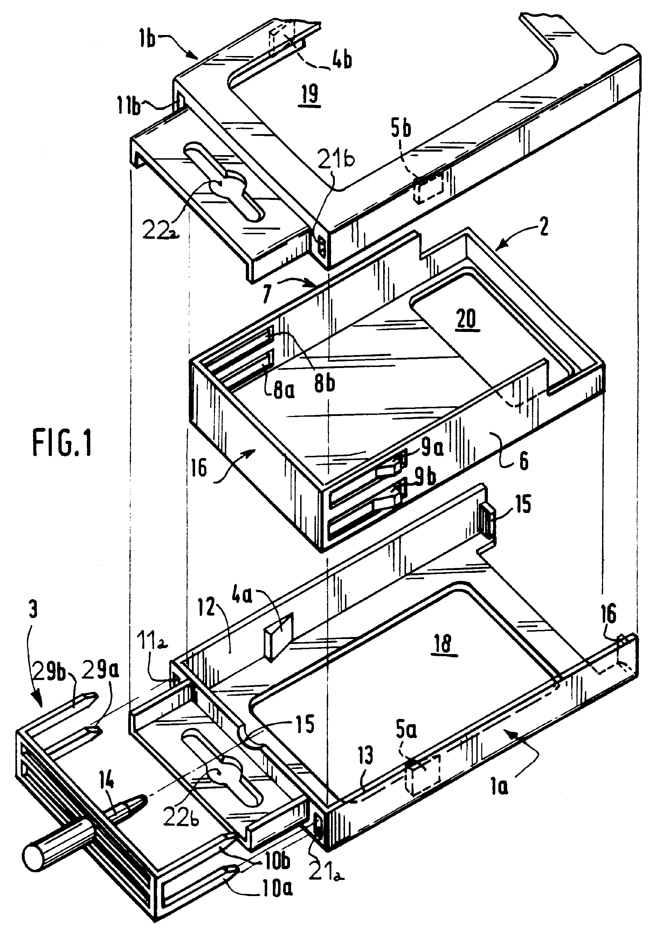

Si l'on se reporte aux schémas annexés et plus particulièrement à la figure 1, figure dans laquelle les différents éléments constituant l'ensemble conforme à l'invention sont représentés en vue éclatée, représentés de façon partielle pour l'une des parties de l'ensemble formant coffret, cet ensemble de rangement, déplaçable, a la structure suivante. Il est constitué essentiellement par un coffret comprenant dans le cas présent deux pièces élémentaires (1a,1b) identiques, obtenues par moulage d'une matière plastique, telle que par exemple du polycarbonate. Ces deux pièces élémentaires (1a,1b) définissent, lorsqu'elles sont assemblées bord à bord, un espace fermé, ouvert sur l'une de ses faces extrêmes et à l'intérieur duquel est disposé un tiroir (2), également obtenu par moulage d'une matière plastique (polycarbonate). Le tiroir (2) a des dimensions telles qu'il puisse coulisser à l'intérieur de l'enceinte et prendre deux positions, l'une escamotée à l'intérieur du coffret (position représentée à la figure 1), l'autre sortie de ce dernier mais non désolidarisée afin de prendre l'objet qu'il renferme. Conformément à l'invention, ces deux éléments : boitier (1a,1b) et tiroir (2) comportent des moyens qui permettent, en coopération, de les maintenir normalement bloqués en position fermée du tiroir. Ces moyens sont susceptibles d'être actionnés par un ensemble, désigné par la référence générale (3) de déverrouillage du tiroir et ce, en dehors du site de présentation, par exemple à la caisse.

Dans la forme de réalisation illustrée, les moyens de blocage du tiroir (2) par rapport au coffret, forment partie intégrante dudit boitier et tiroir et sont également obtenus directement dans l'opération de moulage de ces éléments. De tels moyens sont constitués par deux butées ou rampes fixes (4a,4b - 5a,5b) sur les parois internes de l'enceinte ou coffret (1a,1b). Sur les parois latérales (7,6) correspondantes du tiroir (2), sont prévues des butées escamotables (8a,8b, 9a,9b) dans les parois (7,6) dudit tiroir (2), ces butées débordant normalement par rapport à la surface externe desdites parois (7,6). Les différentes butées sont disposées à un même niveau.

Grâce à un tel ensemble de butées fixes et de butées escamotables, il est possible, comme cela sera vu dans la suite de la description, de maintenir le tiroir normalement bloqué à l'intérieur du coffret et de pouvoir l'extraire, en dehors du site de présentation, au moyen d'un ensemble de déverrouillage (3). Un tel ensemble de déverrouillage est constitué essentiellement par deux paires de poussoirs (29a,29b), (10a,10b) susceptibles d'être introduits à l'intérieur de l'enceinte et ce, au travers d'orifices (11a, 11b - 21a, 21b) prévus sur la paroi arrière du coffret et ce, de telle sorte, qu'en coulissant, ils passent dans l'espace compris entre les parois extérieures (6,7) du tiroir (2) et les parois internes (12,13) du boitier et, lors de ce déplacement, viennent repousser les parties en relief débordantes des butées escamotables (8a,8b, 9a, 9b) et ce, de telle sorte qu'elles se trouvent repoussées vers l'intérieur du tiroir. Simultanément à cette action des poussoirs latéraux, un poussoir central additionnel (14) vient, en passant au travers d'un orifice (15) prévu sur la face arrière du coffret, s'appuyer sur la face arrière (16) du tiroir et le repousse vers l'avant au travers de l'orifice frontal dudit coffret. En position extrême, le tiroir (2) est maintenu à l'intérieur du coffret par la présence des butées extrêmes (15,16) contre lesquelles viennent s'appuyer les parties débordantes en relief des parties flexibles latérales (9a,9b ; 8a,8b). La réalisation d'un tel ensemble de rangement est, comme dit précédemment, obtenue par moulage. Le coffret est constitué de deux pièces identiques (1a,1b) qui sont réunies entre elles par soudure de leurs bords périphériques après mise en place du tiroir (2) à l'intérieur de l'évidement défini entre ces deux parties élémentaires (1a,1b). La largeur du tiroir (2) est telle qu'il puisse coulisser en prenant appui sur les extrémités des butées fixes (4a,4b-5a,5b). Par ailleurs, si les faces visibles du coffret peuvent être pleines, selon une forme de réalisation telle qu'illustrée à la figure 1, elles peuvent comporter des fenêtres ouvertes sur les faces latérales du coffret (fenêtres 18,19) ou à l'extrémité du fond du tiroir (2) (fenêtre 20) pour d'une part, améliorer l'esthétique et d'autre part, faciliter la prise de l'objet à l'intérieur du tiroir.

Dans l'exemple de réalisation illustré, l'ensemble conforme à l'invention est conçu de manière à pouvoir le présenter de façon conventionnelle sur un site de vente à la manière d'un blister. Une telle forme d'utilisation est rendue possible par la présence de parties débordantes, obtenues directement par moulage sur les parties élémentaires (1a,1b) constituant le coffret et qui comportent des ouvertures (22a,22b) permettant le passage d'une tige de présentoir.

Bien entendu, l'invention n'est pas limitée à l'exemple de réalisation décrit précédemment, mais elle en couvre toutes les variantes réalisées dans le même esprit.

Ainsi, il pourrait bien entendu être envisagé de réaliser des ensembles comportant plus de deux paires de butées fixes et de butées escamotables correspondantes, par exemple trois paires, les moyens de déverrouillage comportant alors non pas deux poussoirs mais trois.

Par ailleurs, des moyens additionnels peuvent être prévus dans les espaces dans lesquels sont introduits les poussoirs, par exemple de petites protubérances formant des chicanes qui, tout en laissant passer les moyens de déverrouillage, peuvent permettre de dévier des tiges telles que aiguilles qui seraient introduites par une personne indélicate et qui souhaiterait s'approprier l'article contenu dans l'ensemble de rangement conforme à l'invention.

## Revendications

1. Ensemble de rangement déplaçable, permettant d'assurer la présentation et la protection d'articles divers (cassettes, disques, livres..) sur un site de vente, ledit ensemble étant constitué essentiellement par un coffret (1a,1b) renfermant un tiroir coulissant (2), destiné à recevoir le produit, ledit tiroir (2) pouvant prendre deux positions, l'une escamotée à l'intérieur du coffret, l'autre sortie de ce dernier mais non désolidarisée, afin de pouvoir prendre l'objet qu'il renferme, le coffret externe (1a, 1b) et le tiroir (2) qu'il renferme comportant des moyens permettant, en coopération, de maintenir ces deux éléments bloqués en position fermée, moyens susceptibles d'être actionnés par un ensemble de déverrouillage (3) du tiroir (2) et ce, en dehors du site de présentation (par exemple à la caisse) :
- lesdits moyens de blocage en position fermée du tiroir (2) par rapport à l'enceinte (1a,1b) étant constitués :
. par au moins une butée ou rampe fixe (4a,4b-5a,5b) prévue sur les parois latérales internes de l'enceinte ou coffret (1a-1b) ;
. par au moins une butée escamotable (8a,8b-9a,9b) dans les parois du tiroir, maintenue normalement débordante par rapport à ces dernières, et située à un niveau correspondant à celui des butées ou rampes fixes de l'enceinte et,
- les moyens de déverrouillage (3) étant constitués par au moins deux poussoirs (29a,29b - 10a,10b) susceptibles d'être introduits simultanément à l'intérieur de l'enceinte (1a,1b) et qui, lors de leur déplacement, s'appuient contre les butées ou rampes escamotables (8a,8b - 9a,9b) prévues dans les parois (7,6) du tiroir (2) pour les repousser vers l'extérieur de ces dernières.

2. Ensemble de rangement selon la revendication 1, caractérisé en ce que les éléments de blocage en position fermée du tiroir (2) par rapport à l'enceinte (1a,1b) sont constitués par deux paires de butées fixes (4a,4b ; 5a,5b) et deux paires de butées escamotables (8a,8b ; 9a,9b) correspondantes, l'ensemble extracteur (3) comportant deux paires d'éléments poussoirs (29a,29b,10a,10b) parallèles permettant d'agir simultanément sur les rampes ou butées escamotables (8a,8b ; 9a,9b) prévues sur les parois du tiroir (2) ainsi qu'un poussoir additionnel (14) ou éjecteur qui agit sur le fond (16) du tiroir pour le repousser vers l'avant, afin de permettre la prise de l'objet (cassette par exemple) qu'il contient.

3. Ensemble de rangement selon l'une des revendications 1 et 2, caractérisé en ce que l'enceinte ou coffret (1a,1b) et le tiroir (2) sont réalisés à partir d'une matière plastique moulée (polycarbonate), l'enceinte étant constituée de deux parties identiques (1a,1b) assemblées bord à bord par tout moyen approprié tel que soudure aux ultra-sons après mise en place du tiroir (2) entre ces deux parties élémentaires (1a,1b).

4. Ensemble de rangement selon l'une des revendications 1 à 3, caractérisé en ce qu'il comporte un système de détection contre le vol, tel qu'une barrette magnétisée ou une pastille émettant des ondes radioélectriques disposées dans une zone inaccessible par un utilisateur, tel que entre la face inférieure du tiroir (2) et la base du coffret (1).

## Patentansprüche

1. Bewegliche Ausstellungsvorrichtung, welche die Präsentation und den Schutz diverser Artikel (Kassetten, Schallplatten und CDs, Bücher ...) in einer Verkaufsstätte ermöglicht und welche im wesentlichen von einem Gehäuse (1a,1b) gebildet wird, das zur Aufnahme des Artikels eine verschiebbare Schublade (2) umschließt, die zwei Positionen einnehmen kann, nämlich eine im Inneren des Gehäuses eingezogene Position und die andere hieraus herausgeschobene, jedoch nicht hiervon getrennte Position, um das von der Schublade (2) umschlossene Objekt aufnehmen zu können, wobei das äußere Gehäuse (1a,1b) und die davon umschlossene Schublade (2) zusammenwirkende Mittel aufweisen, die es ermöglichen, diese beiden Elemente in der geschlossenen Position verriegelt zu halten, und die durch eine Entriegelungsanordnung (3) für die Schublade (2) betätigbar sind, und zwar an einem Ort außerhalb der Präsentationsstätte (zum Beispiel an der Kasse):
- wobei die Mittel zur Verriegelung der Schublade (2) bezüglich des Gehäuses (1a,1b) in der geschlossenen Position bestehen aus:
. mindestens einem festen Anschlag oder einer festen Rampe (4a,4b-5a,5b) an den inneren Seitenwänden des Gehäuses (1a-1b);
. mindestens einem versenkbaren Anschlag (8a,8b-9a,9b) in den Wänden der Schublade, welcher normalerweise über diese Wände hinausragend gehalten ist und welcher in einer mit der Zone der festen Anschläge oder Rampen des Gehäuses korrespondierenden Zone angeordnet ist, und
- wobei die Entriegelungsmittel (3) von mindestens zwei Ausstoßern (29a,29b - 10a,10b) gebildet sind, die gleichzeitig in das Innere des Gehäuses (1a,1b) einschiebbar sind und die sich während ihrer Verschiebung gegen die versenkbaren Anschläge oder Rampen (8a,8b - 9a,9b) in den Wänden (7,6) der Schublade (2) stützen, um sie aus den Wänden (7,6) der Schublade (2) herauszudrücken.

2. Ausstellungsvorrichtung nach Anspruch 1, dadurch gekennzeichnet, daß die Mittel zur Verriegelung der Schublade (2) bezüglich des Gehäuses (1a,1b) in der geschlossenen Position aus zwei Paaren fester Anschläge (4a,4b ; 5a,5b) und zwei korrespondierenden Paaren versenkbarer Anschläge (8a,8b ; 9a, 9b) bestehen, wobei die Entriegelungsanordnung (3) zwei Paar paralleler Ausstoßelemente (29a,29b ; 10a,10b), welche gleichzeitig auf die in den Wänden der Schublade (2) vorgesehenen versenkbaren Rampen oder Anschläge (8a,8b ; 9a,9b) wirken, sowie einen zusätzlichen Ausstoßer (14) umfaßt, der auf die Endwand (16) der Schublade wirkt, um diese nach vorne zu drücken, so daß eine Entnahme des Objektes (zum Beispiel einer Kassette), welches sie enthält, ermöglicht wird.

3. Ausstellungsvorrichtung nach einem der Ansprüche 1 und 2, dadurch gekennzeichnet, daß das Gehäuse oder die Hülle (1a, 1b) und die Schublade (2) aus einem geformten Kunststoffmaterial (Polycarbonat) gefertigt sind, wobei das Gehäuse aus zwei identischen Teilen (1a,1b) besteht, welche an ihren Rändern mit geeigneten Mitteln, wie Ultraschallschweißungen, aneinandergefügt sind, nachdem die Schublade (2) zwischen diesen Einzelteilen (1a,1b) angeordnet wurde.

4. Ausstellungsvorrichtung nach einem der Ansprüche 1 bis 3, dadurch gekennzeichnet, daß sie ein Diebstahl-Ermittlungssystem, wie einen Magnetstreifen oder einen radioelektrische Wellen aussendenden Chip, umfaßt, welches in einer für den Benutzer unzugänglichen Zone, wie zwischen der unteren Fläche der Schublade (2) und der Grundwand des Gehäuses (1), angeordnet ist.

## Claims

1. Movable storage assembly for the display and protection of various articles (cassettes, records, books, etc.) at a selling site, the said assembly consisting essentially of a case (1a, 1b) enclosing a sliding drawer (2), intended to receive the product, the said drawer (2) being able to assume two positions, one retracted inside the case, the other outside the latter but not detached, in order to be able to take the object it encloses, the outer case (1a, 1b) and the drawer (2) it encloses including means making it possible, in cooperation, to hold these two elements blocked in a closed position, means capable of being actuated by an unlocking assembly (3) of the drawer (2), this being outside the display site (for example at the cash desk):
- the said means for blocking the drawer (2) in the closed position with respect to the chamber (1a, 1b) consisting:
. of at least one stop or fixed ramp (4a, 4b-5a, 5b) provided on the inner lateral walls of the chamber or case (1a-1b);
. of at least one retractable stop (8a, 8b-9a, 9b) in the walls of the drawer, normally held so as to project with respect to said walls, and located at a level corresponding to that of the fixed stops or ramps of the chamber, and
- the unlocking means (3) consisting of at least two pushers (29a, 29b - 10a, 10b) capable of being introduced simultaneously inside the chamber (1a, 1b) and which, when displaced, bear against the retractable stops or ramps (8a, 8b - 9a, 9b) provided in the walls (7, 6) of the drawer (2) in order to push them towards the outside of said walls.

2. Storage assembly according to Claim 1, characterized in that the elements for blocking the drawer (2) in the closed position with respect to the chamber (1a, 1b) consist of two pairs of fixed stops (4a, 4b; 5a, 5b) and two pairs of corresponding retractable stops (8a, 8b; 9a, 9b), the extractor assembly (3) including two pairs of parallel pusher elements (29a, 29b, 10a, 10b) making it possible to act simultaneously on the retractable ramps or stops (8a, 8b; 9a, 9b) provided on the walls of the drawer (2) as well as an additional pusher (14) or ejector which acts on the bottom (16) of the drawer in order to push it forwards, in order to enable the object (for example, a cassette) which it contains to be gripped.

3. Storage assembly according to one of Claims 1 and 2, characterized in that the chamber or case (1a, 1b) and the drawer (2) are produced from a moulded plastic (polycarbonate), the chamber consisting of two identical parts (1a, 1b) assembled edge-to-edge by any appropriate means such as ultrasonic welding after positioning of the drawer (2) between these two elementary parts (1a, 1b).

4. Storage assembly according to one of Claims 1 to 3, characterized in that it includes an anti-theft detection system, such as a magnetic bar or a chip emitting radioelectric waves arranged in a zone inaccessible to a user, such as between the lower face of the drawer (2) and the base of the case (1).
